**Europäisches Patentamt**

(19) **European Patent Office**

**Office européen des brevets**

(11) Veröffentlichungsnummer: **0 062 764**
**B1**

(12) **EUROPÄISCHE PATENTSCHRIFT**

(45) Veröffentlichungstag der Patentschrift:
14.01.87

(51) Int. Cl.⁴: **H 01 F 41/20, H 01 F 10/16**

(21) Anmeldenummer: **82101859.5**

(22) Anmeldetag: **09.03.82**

(54) **Verfahren zur Herstellung einer metallischen Dünnfilm-Magnetplatte und Anordnung zur Durchführung dieses Verfahrens.**

(30) Priorität: **11.04.81 DE 3114740**

(43) Veröffentlichungstag der Anmeldung:
**20.10.82 Patentblatt 82/42**

(45) Bekanntmachung des Hinweises auf die Patenterteilung:
**14.01.87 Patentblatt 87/3**

(84) Benannte Vertragsstaaten:
**DE FR GB IT**

(56) Entgegenhaltungen:
US-A-3 904 503
US-A-4 183 797

THIN SOLID FILMS, Band 37, Nr. 3, 16. September 1976, Seiten 423-427, Elsevier Sequoia S.A., Lausanne, CH; L.J. TAO u.a.: "NiFe films deposited by sputter gun and applications to bubble devices"
JOURNAL OF CRYSTAL GROWTH, Band 45, 1978, Seiten 361-364, North-Holland Publishing Company; M. NAOE u.a.: "High rate deposition of magnetic films by sputtering from two facing targets"
IEEE TRANSACTIONS ON MAGNETICS, Band MAG-15, Nr. 4, Juli 1979, Seiten 1135-1137, IEEE, New York, US; W.T. MALONEY: "Sputtered multilayer films for digital magnetic recording"
IEEE TRANSACTIONS ON MAGNETICS, Band MAG-15, Nr. 6, November 1979, Seiten 146-148, IEEE, New

(73) Patentinhaber: **IBM DEUTSCHLAND GMBH, Pascalstrasse 100, D-7000 Stuttgart 80 (DE)**
(84) Benannte Vertragsstaaten: **DE**

(73) Patentinhaber: **International Business Machines Corporation, Old Orchard Road, Armonk, N.Y. 10504 (US)**
(84) Benannte Vertragsstaaten: **FR GB IT**

(72) Erfinder: **Brunsch, Arwed, Dr., Dipl.- Phys., Am Bopserweg 8, D-7000 Stuttgart 1 (DE)**
Erfinder: **Trippel, Gerhard, Dr., Dipl.- Phys., Steinenbronner Strasse 15, D-7032 Sindelfingen (DE)**
Erfinder: **Ruh, Wolf- Dieter, Dipl.- Ing., Sommerhofenstrasse 152/1, D-7032 Sindelfingen 1 (DE)**

(74) Vertreter: **Herzog, F. Joachim, Dipl.- Ing., Schönaicher Strasse 220, D-7030 Böblingen (DE)**

(56) Entgegenhaltungen: (Fortsetzung)
York, US; W.T. MALONEY: "RF-sputtered chromium-cobalt films for high-density longitudinal magnetic recording"
IEEE TRANSACTIONS ON MAGNETICS, Band MAG-15, Nr. 6, November 1979, Seiten 1830-1832, IEEE, New York, US; K. ISHII u.a.: "Deposition of ferromagnetic metal thin films by ion beam sputtering"

EP 0 062 764 B1

## Beschreibung

Die Erfindung betrifft ein Verfahren zur Herstellung einer metallischen Dünnfilm-Magnetplatte, bei der auf einem Substrat zunächst eine Metallunterschicht, insbesondere aus Chrom, und danach eine metallische Magnetschicht unter einem Winkel zwischen ca. 50° und 75° schräg zur Substratnormalen im Vakuum aufgebracht wird sowie eine Anordnung zur Durchführung dieses Verfahrens.

Aus der deutschen Offenlegungsschrift DE-OS 2 250 460 ist ein magnetischer Aufzeichnungsträger bekannt, auf dessen, beispielsweise aus einer Aluminiumlegierung bestehenden Substrat eine metallische Zwischen- bzw. Unterschicht aus Chrom, Titan, Mangan oder Vanadium aufgebracht ist. Auf diese Unterschicht wird dann sehr dünn die metallische magnetische Aufzeichnungsschicht aufgebracht, die aus einer Eisen-Kobalt-Legierung besteht. Sowohl die Unterschicht als auch die magnetische Dünnschicht werden im Vakuum aufgebracht, welches besser als 0,01 µbar sein muß. Die aus der Eisen-Kobalt-Legierung bestehende Magnetschicht wird unter einem Einfallswinkel von ca. 60° zur Substratnormalen aufgedampft.

Durch das Schrägaufdampfen wird eine Richtungsanisotropie des magnetischen Filmes und damit eine Erhöhung der Koerzitivfeldstärke erzielt. Um diese schräge Anordnung der einzelnen Partikel des magnetischen Materials auf dem Aufzeichnungsträger sicherzustellen, muß der Dampfdruck so eingestellt sein, daß die mittlere freie Weglänge mindestens dem Abstand zwischen der Verdampfungsquelle und dem Substrat entspricht, d.h., daß das aus der Quelle austretende Partikel auf seinem Weg bis zum Aufzeichnungsträger keinen Zusammenstoß mit einem Gasteilchen haben darf. Diese Forderung ist bei dem im Zusammenhang mit der deutschen Offenlegungsschrift 2 250 460 genannten Mindestwert für das Vakuum von 0,01 µbar erfüllt.

Beim Aufdampfen einer Mehrkomponentenlegierung entstehen Schwierigkeiten und Instabilitäten daraus, daß die Dampfdrücke der Materialien ungleich sind und somit auch die Dampfraten. So schwankt die Zusammensetzung des aufgedampfen Magnetmateriales, unabhängig davon, ob aus mehreren Quellen mit je einer Materialkomponente oder aus einer Quelle mit dem zusammengesetzten Legierungsmaterial, einer Multikomponentenlegierung, verdampft wird. Zu der zuletzt genannten Art zählt auch die Rod-Feed-Technik, bei der die zu verdampfende Legierung in Stabform vorliegt. Dabei wird der Stab an einem Ende erhitzt, so daß sich ein Schmelzpool bildet, und er wird entsprechend der Verdampfungsrate jeweils nachgeschoben. Dabei führen Inhomogenitäten im zu verdampfen Material und Schlackenbildung auf der Oberfläche des Schmelzpools zu Raten- und Konzentrationsschwankungen im fertigen Magnetfilm.

Aus der deutschen Offenlegungsschrift DE-OS 2 250 481 ist ebenfalls ein magnetischer Dünnfilm-Aufzeichnungsträger mit magnetischer Metallschicht und metallischer Unterschicht bekannt. Die Magnetschicht besteht aus Eisen-Kobalt und wird schräg zur Substratnormalen unter einem Winkel zwischen 50 und 75°, vorzugsweise von ca. 60°, bei einem Vakuum von besser als ca. 0,1 µbar aufgedampft. Die beispielsweise Chrom enthaltende metallische Unterschicht ist dabei nicht schräg aufgedampft. Über die z.B. reines Chrom und im wesentlichen beabsichtigt Chromoxid enthaltende Unterschicht ist in dieser bekannten Offenlegungsschrift ausgesagt, daß die Unterschicht durch ihre Härte als Oxid- oder Nitridschicht dazu beiträgt, die Koerzitivfeldstärke zu erhöhen und daß das beispielsweise rein enthaltene Chrom in dieser Schicht sich nicht nachteilig auf die magnetischen Eigenschaften der anschließend schräg aufgedampfen Eisen-Kobalt-Schicht auswirkt.

In der deutschen Offenlegungsschrift DE-OS 2 347 540 ist ein Verfahren zur Herstellung einer metallischen Dünnfilm-Magnetplatte mit unterschiedlicher Koerzitivfeldstärke am Innen- bzw. Außendurchmesser beschrieben. Beidseitig eines senkrecht angeordneten Plattensubstrats ist außerhalb des vom Substrat bei seiner Drehung beschriebenen Zylinders je eine Verdampfungsquelle für eine Eisen-Kobalt-Legierung derart in einer Vakuumkammer angeordnet, daß der Einfallswinkel zwischen dem Dampfstrahl und der Senkrechten des Substrats am Außendurchmesser kleiner als am Innendurchmesser ist. Das Plattensubstrat wird gedreht und durch beidseitig angeordnete Abschirmanordnungen wird die Dicke des niedergeschlagenen Films gesteuert. Die schräge Aufdampfung des Magnetfilms erfolgt auch bei diesem bekannten Verfahren bei einem Vakuum, welches besser als 0,01 µbar ist.

Der Stand der Technik zeigt eindeutig, daß der Druckbereich bei schrägem Aufbringen mindestens bei einem Vakuum von ca. 0,1 µbar liegen muß. Der Grund dafür liegt in dem Zusammenhang mit der nötigen mittleren freien Weglänge für die Dampfpartikel. Aus diesem Grunde ist deshalb für das schräge Aufbringen von Magnetmaterialien bisher ausschließlich die Aufdampftechnik angewandt worden. Dies ist jedoch ein aufwendiger und oft instabiler Prozeß, der nicht zu optimalen Ergebnissen führt.

Hier will die Erfindung Abhilfe schaffen. Die Erfindung, wie sie in den Ansprüchen gekennzeichnet ist, löst die Aufgabe, ein Verfahren zur Herstellung einer metallischen Dünnfilm-Magnetplatte anzugeben, welches einfacher als die bisherigen ist und magnetische Ergebnisse zustandebringt, die gleich oder besser sind als diejenigen bei nach bekannten Verfahren hergestellten Magnetplatten.

Die mit der Erfindung erzielten Vorteile liegen im wesentlichen darin, daß das gegenüber dem Aufdampfverfahren wesentlich einfachere Kathodenzerstäubungsverfahren angewendet wird und damit eine Magnetplatte herstellbar ist, deren magnetische Eigenschaften denjenigen von aufgedampften Materialien gleicher Art gleichen bzw. überlegen sind. Darüber ist bei vorliegendem Verfahren aufgrund der Tatsache, daß die Unterschicht und die magnetische Speicherschicht im gleichen Druckbereich aufgesputtert werden, es möglich, dieses Verfahren und die zugehörige Anordnung so zu gestalten, daß eine einfache Linienfertigung möglich ist.

Die Erfindung ist nachstehend anhand eines lediglich einen Ausführungsweg darstellenden Ausführungsbeispieles unter Zuhilfenahme der Zeichnung dargestellt. In dieser Zeichnung zeigen:

Fig. 1 schematisch die Anordnung zur Durchführung des erfindungsgemäßen Verfahrens;

Fig. 2 den prinzipiellen Aufbau der erfindungsgemäß hergestellten Magnetplatte an einem geschnittenen Ausschnitt;

Fig. 3 in Draufsicht, jedoch in anderem Maßstab als Fig. 1, die Form und Anordnung der Abdeckung über der Platte;

Fig. 4 ein Diagramm, in dem die Magnetfeldstärke in Abhängigkeit von dem beim Kathodenzerstäuben herrschenden Druck im Vakuumgefäß für zwei verschiedene Schichtdicken der magnetischen Schicht dargestellt ist und

Fig. 5 ein Diagramm, in dem in Abhängigkeit von der Dicke der Chrom-Unterschicht die magnetische Feldstärke aufgetragen ist, jeweils am Innen-, am mittleren oder am äußeren Durchmesser des Aufzeichnungsbereiches der erfindungsgemäß hergestellten Magnetplatte.

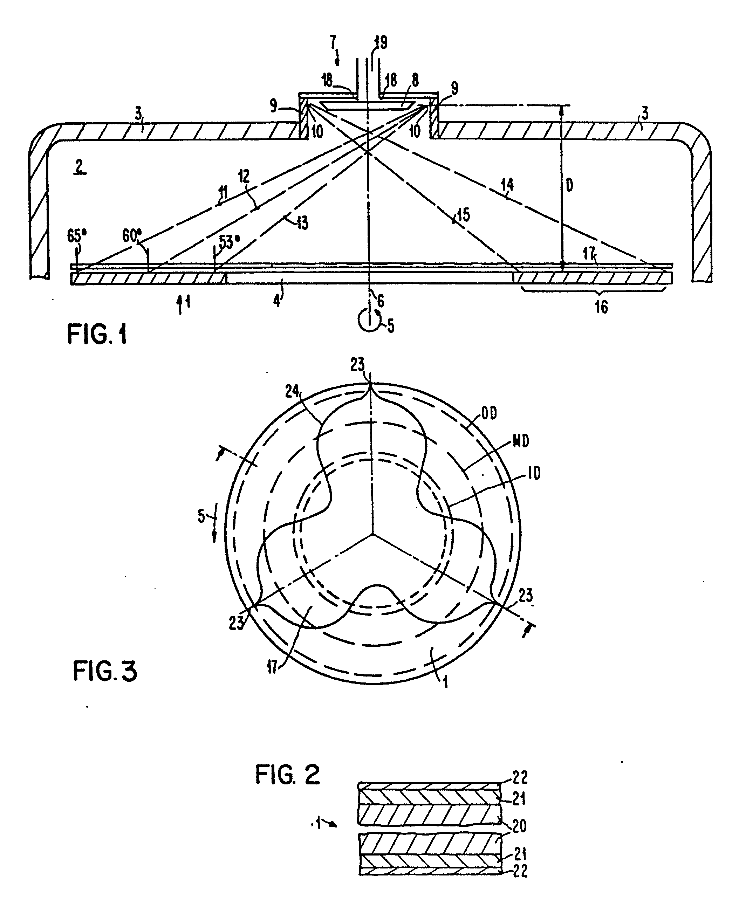

Die zu beschichtende Magnetplatte 1 ist gemäß Fig. 1 innerhalb einer Vakuumkammer 2, die von einem Gehäuse 3 umgeben ist, untergebracht. Die Anordnung ist in Fig. 1 schematisch dargestellt. Die mit einem Mittelloch 4 versehene Platte 1 ist gemäß einem Pfeil 5 drehbar um eine Achse 6 angeordnet. Zentralsymmetrisch dazu ist eine Kathodenzerstäubungsanordnung 7 mit einer Anode 8 und einer Kathode 9 vorgesehen. Dabei umgibt die Kathode 9 vorzugsweise ringförmig die Anode. In den Bereichen 10 wird von der Kathode das Material abgetragen und zerstäubt und in Richtung der Strahlen 11 bis 15 auf die Magnetplatte 1 aufgebracht. Dabei wird insbesondere der der magnetischen Aufzeichnung dienende Bereich 16, der zwischen dem Außendurchmesser OD und dem Innendurchmesser ID liegt, mit Magnetpartikeln beschichtet, die einen Einfallswinkel zur Substratnormalen bzw. zur Rotationsachse 6 haben, der am Innendurchmesser ID etwa 53°, am Außendurchmesser OD etwa 65° und am mittleren Durchmesser MD etwa 60°, vgl. den Strahl 12, beträgt.

Unmittelbar oberhalb bzw. vor der Magnetplatte 1 ist eine Sektor-Abdeckung 17 angeordnet, die in Fig. 1 gestrichelt und unterbrochen im Schnitt dargestellt ist, um damit darzustellen, daß sie Beschichtungsmaterial auf die Platte 1 hin durchläßt. Eine besondere Form der Sektorabdeckung 17 ist in der Darstellung der Fig. 3 gezeigt. Die Platte 1 ist in einem derart gewählten Abstand D von der Kathodenzerstäubungsvorrichtung 7 entfernt angeordnet, daß sich der genannte und eingezeichnete Winkel zwischen den Einfallsstrahlen 11 bis 15 des Materials und der Substratnormalen 6 ergibt. Oberhalb der Anode 8 wird an den Stellen 18 Argongas in die Kammer 2 eingeführt, das über eine Leitung 19 zugeführt wird. Die elektrischen Anschlüsse für die Anode 8 und die Kathode 9 sind nicht dargestellt.

In Fig. 2 ist schematisch der prinzipielle Aufbau der gemäß dem erfindungsgemäßen Verfahren hergestellten Magnetplatte 1 dargestellt. Demgemäß ist ein Kern 20 beidseitig mit einer Unterschicht 21 beschichtet, auf der wiederum eine magnetische Schicht 22 gemäß dem vorliegenden Verfahren aufgebracht wird. Die Unterschicht 21 besteht dabei aus Chrom, welches in einer Anordnung gemäß der Fig. 1 unter dem genannten schrägen Einfallswinkel aufgebracht wird. Nachdem diese Chromschicht aufgebracht worden ist, wird das magnetische Aufzeichnungsmaterial, nämlich die Eisen-Kobalt-Chromschicht (FeCoCr) aufgebracht. Die Aufbringung kann gleichzeitig von beiden Seiten erfolgen, wozu eine zweite Kathodenzerstäubungsvorrichtung 7 mit einer zweiten Sektorabdeckung unterhalb der in Fig. 1 dargestellten Magnetplatte 1 anzuordnen ist.

Mit der Sektor-Abdeckung 17, die in Fig. 3 dargestellt ist, und die im wesentlichen aus drei Teilen, die etwa insgesamt die Form eines Kleeblattes ergeben und an Halterungen 23 befestigt ist, wird durch deren besondere Kurvenform 24 sichergestellt, daß beim Beschichtungsvorgang und der Drehung der Platte 1 in Richtung des Pfeiles 5 die Schichtdicke am Innendurchmesser ID, am Mitteldurchmesser MD und am Außendurchmesser OD gleichmäßig ist. Dies natürlich vorausgesetzt, daß die Dicke der Schicht 21 bzw. 22 zwischen dem Innendurchmesser ID und dem Außendurchmesser OD gleichmäßig sein soll. Man kann die Form der Sektor-Abdeckung 17 auch so wählen, daß die Schichtdicke entsprechend der gewünschten Weise und dem gewünschten Verlauf ungleichmäßig zwischen dem Innendurchmesser ID und dem Außendurchmesser OD ist.

Der Arbeitsdruck der Argon-Gasatomsphäre, die in der Vakuumkammer 2 sowohl beim Aufbringen der aus Chrom bestehenden Unterschicht 21 als auch der aus FeCoCr-Legierung bestehenden magnetischen Aufzeichnungsschicht herrscht, ist erfindungsgemäß zwischen 5 und 15 µbar

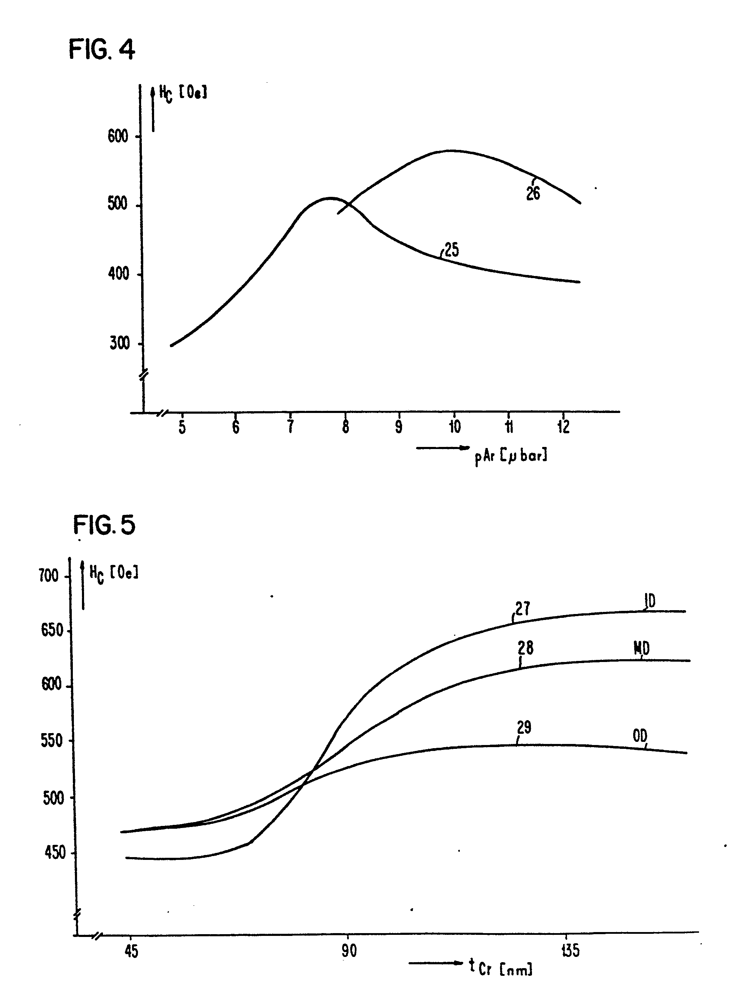

gewählt, liegt jedoch vorzugsweise im Druckbereich zwischen 8 und 12 µbar. In Fig. 4 ist in Abhängigkeit vom Druck der Argonatomsphäre $P_{Ar}$ die Magnetfeldstärke $H_C$ für zwei verschiedene Magnetschichten aufgetragen. Im Fall der mit 25 bezeichneten Kurve handelt es sich um verschiedene Platten, die hergestellt wurden bei unterschiedlichen Drücken, die zwischen 5 und 12 µbar beschichtet wurden, bei denen jeweils aber die Dicke der Chromunterschicht $t_{Cr}$ 90 nm betrug, der Abstand D zwischen der Kathodenzerstäubungsvorrichtung 7 und der Platte 1 12 cm betrug, die Zerstäubungsrate 3 nm/min betrug und die Dicke der magnetischen FeCoCr-Schicht 48 nm betrug. Der Kurve 25 ist zu entnehmen, daß mit etwa 500 Oe die höchste magnetische Feldstärke bei einem Druck von ca. 8 µbar erzielt wird, wenn die Auftragsrate 3 nm/min beträgt. Es wurde nun festgestellt, daß bei höheren Drücken und einer höheren Auftragsrate für die FeCoCr-Schicht 22 von 5 nm/min bei etwa 10 µbar eine Koerzitivfeldstärke von fast 600 Oe erzielt wird. Die Kurve 26 zeigt die verschiedenen Werte der Koerzitivfeldstärke bei Beispielen der Schichtstärke von 30 nm und der Auftragsrate von 5 nm/min in Abhängigkeit von den verschiedenen Druckwerten des Vakuums.

In Fig. 5 ist über der Dicke $t_{Cr}$ der Chromschicht, angegeben in nm, aufgetragen, die Koerzitivfeldstärke $H_C$ eines FeCoCr-Magnetfilms mit einer Dicke von 30 nm. Die Kurven 27, 28 und 29 stellen die Koerzitivkraft am Innendurchmesser ID, am mittleren Durchmesser MD und am äußeren Durchmesser OD des interessierenden Speicherbereiches 16 der Magnetplatte 1 dar. Die Kurven wurden so gewonnen, daß Beispiele von Platten mit unterschiedlichen Werten für die Dicke $t_{Cr}$ der aus Chrom bestehenden Unterschicht 21 hergestellt wurden und darauf jeweils eine FeCoCr-Magnetschicht mit einer Dicke von 30 nm aufgetragen wurde. Anschließend ist die Koerzitivfeldstärke an den verschiedenen Durchmessern festgestellt worden. Man erkennt aus den Kurven, daß bei dem Wert für die Unterschichtdicke $t_{Cr}$ von ca. 90 nm Werte erzielt werden, die sowohl am Innendurchmesser ID als auch am Außendurchmesser OD bereits in einem recht günstigen Bereich liegen, ohne dabei zu stark voneinander abzuweichen. Durch Variation der Schichtdicke $t_{Cr}$ der aus Chrom bestehenden Unterschicht zwischen Innendurchmesser ID und Außendurchmesser OD ist eine Möglichkeit gegeben, eine recht hohe Koerzitivfeldstärke zu erzielen.

**Patentansprüche**

Verfahren zur Herstellung einer metallischen Dünnfilm-Magnetplatte (1), bei der auf einem Substrat (20) zunächst eine Metallunterschicht (21), insbesondere aus Chrom, und danach die metallische Magnetschicht (22) unter einem Winkel zwischen ca. 50° und 75° schräg zur Substratnormalen (6) im Vakuum aufgebracht wird, dadurch gekennzeichnet, daß
   a) die Aufbringung durch Kathodenzerstäubung (Sputter-Technik' erfolgt,
   b) das substrat (20) bei der Aufbringung gedreht wird,
   c) die Aufbringung bei einem Arbeitsdruck im Bereich von 5 bis 15 µbar, vorzugsweise bei 8 bis 12 µbar Argondruck ($p_{Ar}$) erfolgt,
   d) die vorzugsweise aus Chrom bestehende Metall-Unterschicht (21) in einer Schichtdicke ($t_{Cr}$) zwischen ca. 50 und 180 nm, vorzugsweise zwischen ca. 80 bis 100 nm, aufgebracht wird.

2. Verfahren nach Anspruch 1, dadurch gekennzeichnet, daß Teile des Substrats (20) bei der Zerstäubung des aufzubringenden Materials abgedeckt werden, um in radialer Richtung auf dem Substrat (20) entweder eine gleiche Schichtdicke oder eine Schichtdicke in gewünschter Abstufung zu erzielen.

3. Anordnung zur Durchführung des Verfahrens nach Anspruch 1, dadurch gekennzeichnet, daß
   in einem Vakuumgefäß (3) zentralsymmetrisch zum Substrat (20) bzw. zur Magnetplatte (1) eine Kathodenzerstäubungsvorrichtung (7) angeordnet ist,
   das Substrat (20) der Magnetplatte (1) um eine Achse (6) drehbar ist,
   der Abstand (D) zwischen der Kathodenzerstäubungsvorrichtung (7) und der zu beschichtenden Oberfläche des Substrats (20) so gewählt ist, daß der gewünschte Einfallswinkel von ca. 60 zwischen der Substratnormalen (6) und den Einfallsstrahlen (11 bis 15) des Beschichtungsmaterials erreicht wird.

4. Anordnung nach Anspruch 3, dadurch gekennzeichnet, daß unmittelbar über der zu beschichtenden Magnetplatte (1) eine Sektor-Abdeckung (17) vorgesehen ist, die bei gewünschter, etwa gleicher Schichtdicke, die Form eines dreiblättrigen Kleeblatts aufweist bzw. aus drei blattförmigen, gleichmäßig über dem Substrat winklig verteilt angeordneten und in bestimmter Kurvenform (24) abdeckenden Weise die Oberfläche der Magnetplatte (1) abdeckt.

5. Anordnung nach Anspruch 3 oder 4, dadurch gekennzeichnet, daß beidseitig der zu beschichtenden Magnetplatte (1) in der Vakuumkammer (2) eine Kathodenzerstäubungsvorrichtung (7) angeordnet ist, um beidseitig das Substrat (20) zu beschichten.

6. Verfahren bzw. Anordnung nach einem der vorigen Ansprüche, gekennzeichnet durch die Verwendung einer Eisen-Kobalt-Chrom-Legierung als Material für die metallische Magnetschicht (22).

## Claims

1. Method of producing a metallic thin film disk (1), wherein a metal undercoat (21), in particular of chromium, is initially deposited on a substrate (20) and a metallic magnetic layer (22) is subsequently vacuum-deposited at an angle of between about 50 and 75° obliquely to the substrate normal (6), characterized in that
   a) deposition is effected by cathode sputtering (sputter technique),
   b) the substrate (20) is rotated during deposition,
   c) deposition is effected at an operating pressure ranging from 5 to 15 μbar, preferably at an argon pressure ($p_{Ar}$) ranging from 8 to 12 μbar,
   d) the metal undercoat (21), Preferably consisting of chromium, is deposited to a layer thickness ($t_{Cr}$) between about 50 and 180 nm, preferably between about 80 and 100 nm.

Method according to claim 1, characterized in that parts of the substrate (20) are covered while the material to be deposited is being sputtered, in order to obtain in a radial direction on the substrate either the same layer thickness or a layer thickness graded as desired.

3. Arrangement for implementing the method according to claim 1, characterized in that in a vacuum vessel (3) a cathode sputtering system (7) is arranged centrosymmetrically to the substrate (20) or the magnetic disk, the substrate (20) of the magnetic disk (1) is rotatable about an axis (6), the spacing (D) between the cathode sputtering system (7) and the surface of the substrate (20) to be coated is chosen in such a manner that the desired angle of incidence of about 60° is obtained between the substrate normal (6) and the incident beams (11 to 15) of the coating material.

4. Arrangement according to claim 3, characterized in that immediately above the magnetic disk to be coated a sector shutter (17) is provided which at a desired, roughly uniform, layer thickness has the shape of a three-leaf clover or consists of three leaf-shaped elements which are evenly and angularly distributed over the substrate, covering the surface of the magnetic disk (1) in a particular curve shape (24).

5. Arrangement according to claim 3 or 4, characterized in that on either side of the magnetic disk (1) to be coated in the vacuum chamber (2) a cathode sputtering system (7) is positioned for coating either side of substrate (20).

6. Method or arrangement according to any one of the preceding claims, characterized by the use of an iron-cobalt-chromium alloy as a material- for the metallic magnetic layer (22).

## Revendications

1. Procédé pour fabriquer un disque magnétique métallique à couches minces (1), selon lequel on dépose sous vide, sur un substrat (20), tout d'abord une souscouche métallique (21), constituée notamment par du chrome, puis une couche magnétique métallique (22) en oblique sous un angle compris entre environ 50° et 75° par rapport à la normale (6) au substrat, caractérisé en ce que
   a) le dépôt s'effectue par pulvérisation cathodique (technique de pulvérisation),
   b) on fait tourner le substrat (20) lors du dépôt,
   c) on réalise le dépôt avec une pression de travail située dans la gamme comprise entre 5 et 15 μbars, de préférence avec une pression d'argon ($P_{Ar}$) comprise entre 8 et 12 μbars,
   d) on dépose la sous-couche métallique (21), constituée de préférence par du chrome, sur une épaisseur de couche ($t_{Cr}$) comprise entre environ 50 et 180 nm, de préférence entre environ 80 et 100 nm.

2. Procédé selon la revendication 1, caractérisé en ce que l'on masque des parties du substrat (20) lors de la pulvérisation du matériau devant être déposé, afin d'obtenir sur le substrat (20), suivant la direction radiale, soit une épaisseur de couche uniforme, soit une épaisseur de couche présentant un étagement désiré.

3. Dispositif pour la mise en oeuvre du procédé selon la revendication 1, caractérisé en ce qu'un dispositif (7) de pulvérisation cathodique est disposé dans une enceinte à vide (3) selon une disposition à symétrie centrale par rapport au substrat (20) ou au disque magnétique (1), que le substrat (20) du disque magnétique (1) peut tourner autour d'un axe (6), et que la distance (D) entre le dispositif (7) de pulvérisation cathodique et la surface du substrat (2) devant être recouverte d'une couche, est choisie afin d'obtenir l'angle d'incidence désiré d'environ 60° entre la normale (6) au substrat et les rayons d'incidence (11 à 15) du matériau de dépôt.

4. Dispositif selon la revendication 3, caractérisé en ce qu'il est prévu directement au-dessus du disque magnétique (1) devant être recouvert d'une couche, un masque en forme de secteur (17) qui possède, pour une épaisseur de couche désirée approximativement uniforme, la forme d'une feuille de trèfle à trois pétales et recouvre la surface du disqur magnétique (1) selon une configuration de masquage possédant la forme de trois pétales disposés en étant répartis angulairement uniformément sur le substrat, avec un contour déterminé (24).

5. Dispositif suivant la revendication 3 ou 4, caractérisé par le fait qu'un dispositif (7) de pulvérisation cathodique est disposé sur les deux faces du disque magnétique (1) devant être recouvert d'une couche, dans la chambrr à vide (2), afin dr recouvrir les deux faces du substrat (20).

6. Procédé ou dispositif selon l'une des revendications précédentes, caractérisé par l'utilisation d'un alliage de fer-cobalt-chrome en tant que matériau pour la couche magnétique métallique (22).

**FIG. 1**

**FIG. 3**

**FIG. 2**

## FIG. 4

## FIG. 5